Europäisches Patentamt

European Patent Office

Office européen des brevets

(19)

(11) Veröffentlichungsnummer: **0 358 004 B1**

(12) # EUROPÄISCHE PATENTSCHRIFT

(45) Veröffentlichungstag der Patentschrift: **05.05.93**

(51) Int. Cl.5: **C22B 11/08**

(21) Anmeldenummer: **89115067.4**

(22) Anmeldetag: **16.08.89**

(54) **Verfahren zur Laugung von Edelmetallen mit einer cyanidhaltigen Laugungslösung und Wasserstoffperoxid.**

(30) Priorität: **09.09.88 DE 3830703**

(43) Veröffentlichungstag der Anmeldung:
**14.03.90 Patentblatt 90/11**

(45) Bekanntmachung des Hinweises auf die Patenterteilung:
**05.05.93 Patentblatt 93/18**

(84) Benannte Vertragsstaaten:
**DE ES FR GB**

(56) Entgegenhaltungen:

| EP-A- 0 265 736 | AU-A- 554 947 |
| CA-A- 1 221 842 | DE-C- 66 764 |
| GB-A- 2 186 563 | US-A- 732 605 |
| US-A- 2 839 387 | US-A- 4 421 724 |
| US-A- 4 578 163 | |

(73) Patentinhaber: **DEGUSSA AKTIENGESELL-SCHAFT**
**Weissfrauenstrasse 9**
**W-6000 Frankfurt 11(DE)**

(72) Erfinder: **Knorre, Helmut, Dr.**
**Ratleikstr. 8c**
**W-6453 Seligenstadt(DE)**
Erfinder: **Lorösch, Jürgen, Dr.**
**Pfarrer Sturmfels-Weg 5**
**W-6450 Hanau 7(DE)**
Erfinder: **Gos, Steven**
**Mittelbuchener Str. 13**
**W-6450 Hanau 1(DE)**
Erfinder: **Stoll, Matthias**
**Torweg 7**
**W-6497 Steinau-Marjoss(DE)**
Erfinder: **Ziegler, Annette**
**Taunusstr. 63**
**W-6050 Offenbach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung richtet sich auf ein Verfahren zur Laugung von Gold und Silber aus Erzen, Erzkonzentraten oder Edelmetallabfällen, insbesondere aus oxidischen und sulfidischen Erzen oder Erzkonzentraten sowie Bergematerial aus früheren unvollständigen Laugungen, mit einer wäßrigen cyanidhaltigen Laugungslösung bei einem pH–Wert von 8–13 unter Zugabe einer wäßrigen Wasserstoffperoxidlösung zum Erzpulp einer Rührlaugung bzw. zur barren solution einer Haufenlaugung und Aufrechterhaltung einer Sauerstoffkonzentration in der Laugungslösung von 2 bis 20 mg/l. Durch die Zugabe von Zersetzungskatalysatoren für Wasserstoffperoxid und ggf. Abtrennung der gebildeten Gold– und Silbercyanokomplexe aus der Laugungslösung während der Laugung gelingt es, den Chemikalienbedarf zu vermindern und in kürzerer Laugungszeit eine höhere Edelmetallausbeute zu erzielen. Durch das erfindungsgemäße Verfahren konnte die Wirtschaftlichkeit der Laugung unter Einsatz von Wasserstoffperoxid als Oxidationsmittel erheblich gesteigert werden.

Es ist bekannt, Gold und Silber mit einer cyanidhaltigen wäßrigen Lösung in Gegenwart von Luftsauerstoff in lösliche Cyanokomplexe zu überführen. Auf diesem Prinzip beruht die Laugung dieser Edelmetalle aus Erzen oder Erzkonzentraten oder aus Edelmetallabfällen, beispielsweise Elektonikschrott. Bie der sogenannten Rührlaugung wird das feingemahlene Erz in Wasser aufgeschlämmt und nach Einstellung des pH–Wertes und Zugabe einer wäßrigen Cyanid–Lösung unter Begasung mit Luft in kaskadenförmig angeordneten zylindrischen Rührgefäßen oder Pachucatanks bis zu 48 Stunden bewegt und dabei gelaugt. Die wäßrige Phase des Erzpulps wird nachfolgend als Laugungslösung bezeichnet. Neben der Rührlaugung findet auch die sogenannte Haufenlaugung industrielle Anwendung, wobei Erzhaufen mit einer auf im allgemeinen pH 9 bis 12 eingestellten und Cyanid enthaltenden Laugungslösung berieselt werden und der Luftsauerstoff als Oxidationsmittel dient.

Sowohl bei der Haufenlaugung als auch Rührlaugung kann es im Erzpulp zu einem Defizit an Sauerstoff kommen, wodurch die Goldausbeute begrenzt und die Laugungsgeschwindigkeit erniedrigt werden. Man hat daher schon früh versucht, die Laugung von edelmetallhaltigen Erzen in Gegenwart anderer Oxidationsmittel als Luft durchzuführen. In diesem Zusammenhang wurde auch Wasserstoffperoxid herangezogen.

So lehrt die US–PS 732 605 ein Verfahren zum Laugen von Erzen, wobei das Erz mit einem Metalloxid gemischt und dieses Gemisch in einer Cyanid–Lösung, welche das Metalloxid reduzierende Wasserstoffperoxid enthält, behandelt wird. Die Menge an reduzierbarem Metalloxid, genannt werden $Fe_2O_3$, $MnO_2$, $Ag_2O$ und $HgO$, soll hierbei mindestens in zu Wasserstoffperoxid äquivalenter Menge vorliegen. Je mehr Metalloxid zugegen ist, desto vorteilhafter soll dies im Hinblick auf die Bildung von nascierendem Sauerstoff sein. Das Erz muß vor der Laugung sorgfältig mit einer solchem Menge Metalloxid gemischt werden, daß ein Gehalt von mindestens 0,05 %, d.h. 500 ppm resultiert. Von diesem seit 1903 bekannten Verfahren, das sich offensichtlich nur auf die Haufenlaugung richtet, machte in der Minenindustrie niemand Gebrauch, weil es den Anforderungen der Praxis nicht gerecht wird: Der Zusatz eines Metalloxids in den genannten Mengen ist nicht nur unwirtschaftlich wegen der Kosten hierfür sowie des erforderlichen Mischprozesses, sondern man muß auch mit einem erhöhten Cyanidverbrauch rechnen, weil die infragestehenden Metalle zum Teil selbst Cyanokomplexe bilden. Durch die Gegenwart der zugemischten Metalloxide in der erforderlichen Menge sind darüberhinaus Störungen in der Laugung selbst, zum Beispiel durch Passivierung, sowie bei der abschließenden Abwasserbehandlung zur Cyanidentgiftung nicht zu vermeiden.

Das aus der US–PS 3,826,723 bekannte Laugungsverfahren unter Verwendung einer cyanidischen Laugungslösung und Wasserstoffperoxid erfordert außer der Gegenwart eines Alkalicyanids und einer stabilisierten Wasserstoffperoxidlösung noch zusätzlich ein Ligninsulfonat. Die in diesem Dokument angegebenen hohen Zugabemengen an Chemikalien, insbesondere an NaCN und $H_2O_2$, erlauben keinen wirtschaftlichen Prozeß.

Das Verfahren der CA–PS 1 221 842 richtet sich auf die Laugung von u. a. Gold und Silber aus Pyrit–Konzentraten, wobei die Laugungslösung ein Alkalicyanid, ein Alkalicarbonat und Wasserstoffperoxid enthält. Gemäß der bevorzugten Ausführungsform enthält die Laugungslösung mindestens 2 Gew.–% Natriumcyanid sowie mindestens 2 Gew.–% Natriumcarbonat und 0,6 Gew.–% Wasserstoffperoxid. Bei diesen hohen Konzentrationen wird Natriumcyanid in erheblichem Umfang durch Wasserstoffperoxid oxidiert – hierauf beruht die bekannt Cyanidentgiftung mit Wasserstoffperoxid – woraus ein zusätzlicher Verbrauch an diesen Chemikalien resultiert. Um die cyanidhaltige Laugungslösung nach Abtrennung der Edelmetallcyanokomplexe wieder in den Laugungsprozeß zurückführen zu können, bedarf es einer aufwendigen Reinigungsstufe. Allein bei dem hohen Chemikalienbedarf ist dieses Verfahren nicht wirtschaftlich zu betreiben.

Wie aus der DE–PS 36 37 082 hervorgeht, läßt sich das Laugungsverfahren unter Einsatz von Cyanid und Wasserstoffperoxid wirtschaftlicher gestalten, wenn man die Zugabe der wäßrigen $H_2O_2$–Lösung über

die Konzentration des in der Laugungslösung gelösten Sauerstoffs in der Weise regelt, daß die Laugungslösung 2 bis 20 mg, bevorzugt 7 bis 13 mg $O_2$ pro Liter enthält. Nach diesem Verfahren wird also Wasserstoffperoxid nicht in einer Portion zugesetzt, sondern kontinuierlich oder periodisch der Laugungslösung bzw. dem Erzpulp zudosiert. Die niedrigsten Verbrauchszahlen an Wasserstoffperoxid werden dann erhalten, wenn Wasserstoffperoxid in Form einer sehr verdünnten wäßrigen Lösung, vorzugsweise mit einem Gehalt von 0,5 bis 5 Gew.−%, insbesondere 1 bis 2 Gew.−%, zudosiert wird.

Bei der praktischen Anwendung des Verfahrens gemäß DE−PS 36 37 082 in Goldminen hat sich gezeigt, daß der Bedarf an Natriumcyanid und Wasserstoffperoxid trotz sorgfältiger Regelung der $H_2O_2$−Dosierung und Einsatz einer verdünnten $H_2O_2$−Lösung nicht immer den Erwartungen entspricht. In einigen Fällen, z. B. der Laugung pyritischer Erzkonzentrate und/oder Bergematerial (dump material) aus früheren unvollständigen Laugungen, kam es zu einem unbefriedigend hohen Chemikalienbedarf. Dieser erhöhte Bedarf hängt offensichtlich mit den physikalischen und chemischen Eigenschaften der zu laugenden Erze zusammen.

Aufgabe der vorliegenden Erfindung ist somit, das Verfahren gemäß der DE−PS 36 37 082 in den oben genannten Fällen dahingehend zu verbessern, daß der Bedarf an Wasserstoffperoxid und möglichst auch Natriumcyanid gesenkt werden kann. Der Chemikalienbedarf sollte ferner unabhängiger von der Zusammensetzung und den naturgegebenen Schwankungen der zu laugenden Erze werden. Zusätzlich besteht in der Minenindustrie großes Interesse, die mit Cyanid maximal laugungsfähige Menge Edelmetall in kürzerer Zeit zu gewinnen, als dies bisher möglich ist.

Gelöst wird diese Aufgabe durch ein Verfahren zur Laugung von Gold und Silber aus Erzen, Erzkonzentraten oder Edelmetallabfällen, insbesondere aus oxidischen und sulfidischen Erzen oder Erzkonzentraten sowie Bergematerial auf früheren unvollständigen Laugungen, mit einer wäßrigen cyanidhaltigen Laugungslösung bei einem pH−Wert von 8−13 unter Zugabe einer wäßrigen Wasserstoffperoxidlösung zum Erzpulp einer Rührlaugung bzw. zur harren solution einer Haufenlaugung und Aufrechterhaltung einer Sauerstoffkonzentration in der Laugungslösung von 2−20 mg/l, das dadurch gekennzeichnet ist, daß man vor oder während der Zudosierung von Wasserstoffperoxid dem Erzpulp einer Rührlaugung bzw. der barren solution einer Haufenlaugung einen Zersetzungskatalysator für Wasserstoffperoxid zugibt, wobei hei der Rührlaugung zweiwertige Manganverbindungen in einer Menge von 1−50 mg, berechnet als Mangan, je kg Laugungslösung oder organische oder anorganische Polymere in einer Menge von 0,1−20 g je kg Laugungslösung oder pulverförmige oder granulierte Kohle in einer Menge von 0,1−50 g je kg Laugungslösung und bei der Haufenlaugung zweiwertige Manganverbindungen in einer Menge von 0,01−1,0 mg, berechnet als Mangan, je kg barren solution als Zersetzungskatalysator zugesetzt werden.

Die Unteransprüche richten sich auf bevorzugte Ausführungsformen des erfindungsgemäßen Verfahrens, wobei die Abtrennung der gebildeten Au− und Ag−Cyanokomplexe während der Laugung besonders vorteilhaft ist.

Die Zugabe der zweiwertigen Manganverbindungen oder der speziellen anorganischen oder organischen Polymere oder der pulverförmigen oder granulierten Kohle bewirkt eine auf das zu laugende Material abgestimmte und geregelte Zersetzung des Wasserstoffperoxids zu Sauerstoff und Wasser. Sowohl die Auswahl des Zersetzungskatalysators und damit seine Aktivität als auch die Menge müssen dem System angepaßt sein, um den niedrigsten Verbrauch an Wasserstoffperoxid und Natriumcyanid bei höchster Ausbeute an Gold und niedrigstem Restgoldgehalt zu erzielen. Der Fachmann wird die optimalen Bedingungen durch Vorversuche ermitteln. Die Zugabe der Zersetzungskatalysatoren erfolgt bei der sog. Rührlaugung zum Erzpulp, bei der sog. Haufenlaugung, in welcher nur Manganverbindungen in sehr geringer Konzentration eingesetzt werden, jedoch zur sog. barren solution, also der im wesentlichen erzfreien Laugungslösung, mit welcher der Haufen berieselt wird.

Bei der konventionellen Rührlaugung bedarf es einer technisch aufwendigen und in mehrfacher Hinsicht nicht unproblematischen Begasung des Erzpulps. Um den Sauerstoffgehalt im Erzpulp zu erhöhen und das Laugungsergebnis zu verbessern, wurde auch vorgeschlagen, anstelle mit Luft mit molekularem Sauerstoff zu begasen und/oder die Laugung unter Druck durchzuführen. Diese Maßnahmen verteuern aber das Verfahren. Während alle Begasungsmethoden den oft gehemmten Phasenübergang des Sauerstoffs aus der gasförmigen in die gelöste Form erfordern, steht der bei der Zersetzung von Wasserstoffperoxid entstehende Sauerstoff in gelöster Form direkt für die Laugung zur Verfügung. Durch die Auswahl und Menge an Zersetzungskatalysatoren für Wasserstoffperoxid können die Sauerstoffkonzentration und die Wasserstoffperoxidkonzentration in der Laugungslösung den Erfordernissen angepaßt werden.

Bei der Auflösung von Gold in Gegenwart von Cyanid und Wasserstoffperoxid sind unterschiedliche Mechanismen wirksam. Um optimale Laugungsergebnisse − hohe Goldausbeute, geringer Restgoldgehalt, hohe Laugungsgeschwindigkeit bei minimalem Chemikalienbedarf und technisch einfacher und zuverlässiger Regelung des Verfahrens − zu erzielen, müssen die Reaktionskomponenten, hier also u. a. Wasserstoffperoxid und der durch Zersetzung desselben entstehende Sauerstoff, in aufeinander abgestimmten Mengen anwesend sein. Dies wird durch die erfindungsgemäße Zugabe eines auf Wasserstoffperoxid zersetzend wirkenden Stoffes bewirkt. Während es in Gegenwart einer niedrigen Konzentration an Wasser – stoffperoxid zu einer Beschleunigung der Laugung kommt, bewirkt eine höhere Konzentration des Gegen – teil, nämlich eine Passivierung.

Es wurde festgestellt, daß bei der Laugung einiger Erze, beispielsweise oxidischer Golderze und Bergematerial aus früheren unvollständigen Laugungen, gemäß dem aus der DE – PS 36 37 082 bekannten Verfahren die Laugungslösung zwar die gewünschte Sauerstoffkonzentration von vorzugsweise 7 bis 13 mg $O_2$/l aufweist, gleichzeitig aber die Konzentration an Wasserstoffperoxid so hoch ist, daß damit Cyanid oxidiert wird. In diesen Fällen sind die Verbrauchszahlen an Cyanid und Wasserstoffperoxid unwirtschaftlich. Durch Anwendung des erfindungsgemäßen Verfahrens gelingt es, die Verbrauchszahlen zu senken.

Es zeigte sich ferner, daß sich erfindungsgemäß die Verbrauchszahlen an Cyanid und Wasserstoffper – oxid auch bei der Laugung sulfidischer Erze, beispielsweise pyritischer und arsenopyritischer Golderze, wesentlich reduzieren lassen. Dieser Befund wird aus den Beispielen mit erfindungsgemäß eingesetzten Zersetzungskatalysatoren im Vergleich zur Laugung in deren Abwesenheit deutlich. Zur Erklärung wird angenommen, daß im Falle einer höheren Konzentration an Wasserstoffperoxid in der Laugungslösung das Sulfid oxidiert wird. Einige der dabei gebildeten Schwefelverbindungen können äußerst schnell mit den Cyanid reagieren und so zu dem erhöhten Cyanidverbrauch beitragen.

Das eine Ausführungsform der Erfindung kennzeichnende Merkmal der Zugabe einer zweiwertigen Manganverbindung – im Falle der Rührlaugung in einer Menge von 1 – 50 mg, vorzugsweise 1 – 10 mg, und im Falle der Haufenlaugung in einer Menge von 0,01 – 1,0 mg, vorzugsweise 0,05 – 0,5 mg, jeweils berechnet als Mangan und bezogen auf 1 kg Laugungslösung – läßt sich aus der vorbekannten US – PS 732,605 nicht als naheliegend herleiten: während erfindungsgemäß nur katalytische Mengen an Mangan – verbindungen eingesetzt werden, mußte nach dem vorbekannten Verfahren das durch Wasserstoffperoxid reduzierbare Metalloxid in mindestens stöchiometrischer Menge zu Wasserstoffperoxid anwesend sein. Während nach dem vorbekannten Verfahren ausschließlich durch $H_2O_2$ reduzierbare Metalloxide dem Erz in einer Menge von mindestens 500 ppm vor der Laugung sorgfältig untergemischt werden mußten, werden die erfindungsgemäßen Manganverbindungen der Laugungslösung oder dem Erzpulp vor oder während der Zugabe von Wasserstoffperoxid zugesetzt. Dabei ist es möglich, nicht nur pulverförmiges Manganoxid MnO zu verwenden, sondern auch andere zweiwertige Manganverbindungen, wie z. B. Sulfat , Hydroxid , Carbonat.

Außer der Zugabe der Manganverbindungen in Form eines Pulvers, lassen sich diese auch in Form einer Suspension oder vorzugsweise als wäßrige Lösung dosieren. Bevorzugt wird eine wäßrige Mangan – II – sulfatlösung, insbesondere in einer Konzentration von 1 bis 10 g $Mn^{2+}$/l, zur Einstellung der Mangan – konzentration in der Laugungslösung verwendet. Bei der Haufenlaugung ist die Verwendung einer Mn – (II) – salzlösung besonders vorteilhaft, weil hiermit eine sorgfältige Mn – Dosierung in der erforderlichen sehr niedrigen Konzentration leicht möglich ist.

Unter barren solution wird jene Laugungslösung verstanden, welche auf den Erzhaufen gesprüht wird. Die sogenannte barren solution ist weitgehend edelmetallfrei; vor dem Aufsprühen werden jedoch der pH – Wert und die Natriumcyanidkonzentration eingestellt. Zusätzlich werden die erfindungsgemäß Mengen von Zersetzungskatalysator und $H_2O_2$ zugefügt.

Der Einsatz von Manganverbindungen gemäß der Erfindung zeichnet sich gegenüber den anderen in der US – PS 732,605 genannten Verbindungen auch dadurch aus, daß unter den laugungsbedingungen keine Cyanid verbrauchenden Cyanokomplexe gebildet werden und auch keine die Laugungsgeschwindig – keit beeinträchtigende Adsorption von in größerer Menge zugesetzten Schwermetallionen stattfinden kann.

Anstelle von Manganverbindungen können bei der Rührlaugung erfindungsgemäß auch auf Wasser – stoffperoxid zersetzend wirkende organische oder anorganische Polymere in einer Menge von 0,1 bis 20 g, vorzugsweise 1 bis 10 g, pro kg Laugungslösung eingesetzt werden; das Polymere, das üblicherweise in der Laugungslösung nicht löslich ist, wird vor oder während der $H_2O_2$ – Zugabe zum Erzpulp gegeben.

Als anorganische Polymere können z. B. silikatische Polymere, wie Zeolithe, als organische Polymere, z. B. Kationenaustauscher verwendet werden. Zur Verstärkung oder Ausbildung der erforderlichen Eigen – schaft, die Zersetzung von $H_2O_2$ in Wasser und Sauerstoff zu bewirken, können die polymeren Stoffe chemisch oder physikalisch gebundene Schwermetalle oder Schwermetallverbindungen, vorzugsweise Mangan – oder Kupferverbindungen, enthalten. Die Ausbildungsform mit an Polymeren gebundenen Zer – setzungskatalysatoren ist dann von Interesse, wenn deren zersetzende Wirkung bei der Cyanidentgiftung ausgeschlossen werden soll.

Gemäß einer bevorzugten Ausführungsform des Verfahrens verwendet man pulverförmige oder granu – latförmige Kohle in einer Menge von 1 bis 50 g, vorzugsweise 1 bis 20 g, pro kg Laugungslösung.

Aktivkohlen, insbesondere in granulierter Form und einer Qualität, wie sie bei den bekannten Carbon – in – Leach – (CIL) oder Carbon – in – Pulp – (CIP) Verfahren Anwendung findet, wird besonders bevorzugt. Im allgemeinen ist eine Zugabemenge von 1 bis 10 g Aktivkohle pro kg Laugungslösung ausreichend. Es kann auch eine Aktivkohle verwendet werden, die mit Schwermetallen oder Schwermetallverbindungen als Zersetzungskatalysator für Wasserstoffperoxid beladen ist, verwendet werden. Der erfindungsgemäße Einsatz einer Aktivkohle ist besonders vorteilhaft, wenn Wasserstoffperoxid als Oxidationsmittel im CIL – Prozeß verwendet wird und die gebildeten Cyanokomplexe von Gold und Silber an der gleichen Aktivkohle adsorptiv gebunden werden.

Es wurde gefunden, daß die Laugung im Falle der Rührlaugung besonders wirtschaftlich durchgeführt werden kann, wenn man während der Laugung die bei der Laugung gebildeten Gold – und Silbercyano – komplexe kontinuierlich oder stufenweise aus der Laugungslösung abtrennt. Hierdurch wird die Konzentra – tion an Cyanokomplexen während der Laugung niedrig gehalten. Durch diese Maßnahme kann die Laugungsdauer, insbesondere in jenen Fällen, in welchen bisher die Laugung sich mit fortschreitender Laugung stark verlangsamte und eine hohe Goldausbeute nur nach langer Zeit oder gar nicht erreicht werden konnte, verkürzt werden. Wesentlich ist hierbei, daß nach 4 bis 8 Stunden Laugung praktisch die gesamte cyanid – laugbare Menge Edelmetall gewonnen werden kann. Unter cyanid – laugbarer Menge Edelmetall wird jene Menge verstanden, welche unter bisher günstigsten Laugungsbedingungen, ein – schließlich der Verwendung von Wasserstoffperoxid in Gegenwart von gelösten Zersetzungskatalysatoren im allgemeinen erst nach 24 bis 48 stündiger Laugung aus dem Erz bzw. Erzkonzentrat extrahiert werden konnte und sich durch Verlängerung der Laugung nicht mehr steigern ließ.

Die Abtrennung der Edelmetall – Cyanokomplexe kann auf verschiedene Weise erfolgen: Bereits ein kontinuierliches oder stufenweises Ausschleusen eines Teils der Laugungslösung während der Laugung und Ersatz der ausgeschleusten Menge durch frische, d. h. edelmetallfreie oder – arme Laugungslösung führt zu einer Beschleunigung der Laugung.

Eine Alternative zur Abtrennung der Au – und Ag – Cyanokomplexe durch Ausschleusen von Mutterl – auge besteht in der adsorptiven Bindung der Komplexe an Anionenaustauschern, polymer gebundenen Chelatbildnern oder pulver – oder granulatförmiger Kohle. Die Adsorption an Kohle wird bevorzugt. Diese Ausführungsform ist besonders deshalb vorteilhaft, weil übliche Kohlen sowohl auf Wasserstoffperoxid zersetzend wirken als auch eine hohe Adsorptionskraft für Au – und Ag – Cyanokomplexe aufweisen. Die Laugung unter Verwendung von Wasserstoffperoxid wird also im Sinne der sogenannten Carbon – in – Leach – Technik (CIL) durchgeführt. Hierbei kann in an sich bekannter Weise in einem oder, wie meist üblich, in mehreren hintereinander geschalteten Laugungstanks gelaugt werden, wobei im letzten Fall der Erzpulp und die Kohle im Gegenstrom geführt werden. Die Anwendung dieser erfindungsgemäßen Aus – führungsform ist nicht nur bei Erzen mit einem hohem head – grade an Edelmetallen vorteilhaft, sondern auch Erze mit niedrigem Goldgehalt lassen sich unter Verwendung von Wasserstoffperoxid als Oxidations – mittel und Kohle als $H_2O_2$ – Zersetzungskatalysator und Adsorptionsmittel für die Au – und Ag – Cyano – komplexe oft wirkungsvoller und wirtschaftlicher laugen als mittels vorbekannter Verfahren.

Es ist zwar bekannt, das Carbon – in – Leach – Verfahren anstelle mit Luft mit reinem Sauerstoff durchzuführen. Dies führt im allgemeinen zu einer Beschleunigung der Laugung und zum Teil auch einer Ausbeutesteigerung. Dieses sog. CILO – Verfahren (Firmenschrift der Fa. Kamyr – Inc., Mineral Processing Glens Falls, N.Y., USA) wird bei einer Sauerstoffkonzentration im Bereich von 20 bis 35 ppm im Erzpulp durchgeführt. Nach einer Laugungszeit von 5 Stunden wird im CILO – Verfahren eine Goldausbeute erreicht, welche bei Weiterführung der Laugung über 24 Stunden noch zu einer Ausbeutesteigerung um etwa 3 bis 5 % – Punkte führt. Nach 5 Stunden ist also die Laugung noch nicht beendet; gerade bei Erzen mit hohem Goldgehalt wird man auf diese 3 bis 5 % nicht verzichten wollen und die Laugung wesentlich länger als 5 Stunden betreiben.

Im erfindungsgemäßen Verfahren unter Einsatz von Kohle und Wasserstoffperoxid konnte überra – schenderweise nach 4 bis 8 Stunden die maximale mit Cyanid laugbare Menge Gold aus Erzen extrahiert werden. Bei einem weiteren Betrieb der Laugung über 4 bis 8 Stunden hinaus, kommt es praktisch zu keiner weiteren Ausbeutesteigerung. Es war nicht vorherzusehen, daß trotz des niedrigeren $O_2$ – Gehalts in der Laugungslösung – 2 bis 20 mg/l bei Verwendung von $H_2O_2$ und 20 bis 35 ppm bei Verwendung von $O_2$ – erfindungsgemäß eine höhere Goldausbeute nach 4 bis 8 stündiger Laugung erzielt werden konnte, als dies mit dem CILO – Prozeß möglich war. Die oben aufgezeigte Ausführungsform der Erfindung eignet sich zur Laugung von Erzpulp, der sehr viskos und damit sauerstoffabstoßend ist. Die Abtrennung der mit Cyanokomplexen beladenen Kohle vom Erzpulp erfolgt in üblicher Weise, etwa über Siebe.

Die Feststoffkonzentration im Erzpulp von Rührlaugungen richtet sich nach den Eigenschaften des Erzes. Üblich sind meist Feststoffkonzentrationen im Bereich von etwa 20 – 60 Gew. – %.

Erfindungsgemäß wird wäßriges Wasserstoffperoxid in einer Konzentration bis zu 70 Gew.–% eingesetzt. Bevorzugt setzt man Lösungen mit einem Gehalt bis 30 Gew.–% ein. Während bei dem vorbekannten Verfahren der DE–PS 36 37 082 meist Wasserstoffperoxid in Form einer sehr stark verdünnten wäßrigen Lösung, insbesondere 1 bis 2 gew.–%ig, zudosiert werden mußte und damit eine hohe Verdünnung erforderlich war, gelingt es nun, auch höher konzentriertes oder mäßig verdünntes Wasserstoffperoxid direkt einzusetzen.

Ein weiterer Vorteil der Erfindung besteht darin, daß die für die Laugung günstigste $O_2$– und $H_2O_2$–Konzentration in der Laugungslösung erfindungsgemäß viel rascher eingestellt wird, als dies bei der Verwendung von Wasserstoffperoxid ohne die erfindungsgemäßen Zersetzungskatalysatoren möglich war; hierdurch wird die Laugungszeit verkürzt.

Die Laugung erfolgt bei einem pH–Wert im Bereich von 8 bis 13, vorzugsweise 9 bis 12. Zur pH–Einstellung werden wie bei den konventionellen Laugungsverfahren bevorzugt Alkali–oder Erdalkalihydroxide bzw. –oxide eingesetzt. Als Cyanid finden Alkali– oder Erdalkalicyanide Anwendung. Üblicherweise beträgt die Cyanidkonzentration in der Laugungslösung 0,01 bis 0,1 Gew.–%, jedoch sind auch niedrigere und höhere Konzentrationen möglich.

Die Zugabe von Wasserstoffperoxid zum Erzpulp oder zur Laugungslösung erfolgt kontinuierlich oder periodisch in dem Maße, daß in der Laugungslösung eine Sauerstoffkonzentration von 2 bis 20 mg $O_2$/l, vorzugsweise 7 bis 13 mg $O_2$/l, eingestellt und während der Laugung aufrechterhalten wird. Die Sauerstoffkonzentration wird hierbei z. B. mittels einer Sauerstoffelektrode gemessen und die Abweichung des $O_2$–Wertes vom Soll–Wert zur Regelung der Dosiervorrichtung für Wasserstoffperoxid verwendet.

Die Beispiele zeigen, wie durch die erfindungsgemäßen Maßnahmen der Chemikalienverbrauch gegenüber dem Verfahren der DE–PS 36 37 082 vermindert wird und gleichzeitig die maximale Goldausbeute in kürzerer Zeit erreichbar ist.

Beispiel 1

Goldhaltiges Bergematerial aus einer früheren unvollständigen Laugung wurde in drei kaskadenförmig angeordneten Rührbehältern mit einer Volumen von jeweils 1 m³ kontinuierlich gelaugt. Im ersten Behälter wurde die Erzaufschlämmung mit einem Feststoffgehalt von etwa 55 Gew.–% durch Zugabe von Kalkmilch auf pH 10,5 eingestellt. Das Cyanid ("Black Cyanide") und Wasserstoffperoxid wurden in den zweiten Behälter dosiert. Die Dosierung des Wasserstoffperoxids, eingesetzt als 1,33 gew.–%ige wäßrige Lösung, erfolgte in dem Maße, daß die Sauerstoffkonzentration während der 9–stündigen Verweilzeit im zweiten Behälter konstant blieb. In der Laugungslösung wurde jeweils eine Cyanidkonzentration entsprechend 0,04 Gew.–% NaCN eingestellt. In den zweiten Behälter erfolgte auch die Zugabe der erfindungsgemäßen Manganverbindungen als wäßrige $MnSO_4$–Lösung. Der dritte Behälter, auch hierin betrug die Verweilzeit 9 Stunden, diente der Vervollständigung der Laugung.

Der Tabelle sind die Ergebnisse anhand der Laugung von zwei Proben unterschiedlicher Zusammensetzung aber aus der gleichen Mine zu entnehmen. Angegeben sind hierbei der Goldgehalt der eingesetzten Probe (head grade), die Ausbeute in % und die Verbrauchszahlen für Natriumcyanid und Wasserstoffperoxid, bezogen auf 1 t des eingesetzten Bergematerials. Die Laugung erfolgte bei einer $O_2$–Konzentra–tion von 8 bzw. 12 mg/l, jeweils mit und ohne erfindungsgemäße Zugabe einer Mangan–II–verbindung (die Mn–Konzentrationsangabe in mg/kg bezieht sich auf die Laugungslösung). In allen Fällen konnte der Verbrauch an NaCN und $H_2O_2$ durch das erfindungsgemäße Verfahren erniedrigt werden.

| Probe Nr. | O$_2$-Konzentration (mg/l) | Mn-II-Konzentration (mg/kg) | Au-Gehalt (head grade) (g Au/t) | Au-Laugungsausbeute (%) | Cyanid-verbrauch (kg NaCN/t) | H$_2$O$_2$-Verbrauch (kg H$_2$O$_2$ (70 Gew.-%)/t) |
|---|---|---|---|---|---|---|
| 1 | 8 | - | 0,663 | 65,3 | 0,178 | 0,348 |
|  | 8 | 7 ppm als Mn(II) | 0,798 | 67,0 | 0,164 | 0,191 |
| 2 | 12 | - | 0,404 | 35,6 | 0,163 | 0,639 |
|  | 12 | 2,3 ppm als Mn(II) | 0,441 | 50,1 | 0,155 | 0,425 |

**Beispiele 2 und 3**

Vorbehandelte Pyritkonzentrate wurden unter Verwendung von Black Cyanide und Wasserstoffperoxid unter Konstanthaltung einer Sauerstoffkonzentration von 12 mg/l gemäß DE – PS 36 37 082 gelaugt, wobei

7

in Beispiel 2 keine erfindungsgemäße Zugabe einer Mn – Verbindung erfolgte und in Beispiel 3 Mangan – (II) – sulfat zugesetzt wurde. In der Laugungslösung wurde jeweils eine Cyanidkonzentration entsprechend 1,5 Gew. – % NaCN eingestellt. Die Feststoffkonzentration betrug jeweils ca. 25 Gew. – %, die Mangan – (II) – Konzentration in den Beispielen 3 bzw. 4 betrug jeweils 10 mg/kg, bezogen auf den Erzpulp. Die Goldausbeute und Verbrauchszahlen an Natriumcyanid und Wasserstoffperoxid, zugesetzt als 5 gew. – %ige wäßrige Lösung, folgen aus der Tabelle in Abhängigkeit von der Laugungsdauer.

Bei dem vorbehandelten Pyritkonzentrat handelte es sich um ein unter Mitwirkung von Thiobacillus ferrooxidans biologisch voroxidiertes Konzentrat.

| | nach Stdn. Laugung | Beispiel 2 ohne Mn-Zugabe | Beispiel 3 mit Mn(II) |
|---|---|---|---|
| Goldgehalt ( g Au/t) | | 146,0 | 154,8 |
| Goldausbeute (%) | 1 | 64,9 | 69,3 |
| | 4 | 84,7 | 86,4 |
| | 9 | 89,9 | 90,6 |
| | 24 | 94,0 | 93,2 |
| H₂O₂-Verbrauch (kg H₂O₂ (70 Gew.-%)/t Pyritkonzentrat) | 1 | 4,42 | 2,91 |
| | 4 | 5,03 | 4,26 |
| | 9 | 8,52 | 5,51 |
| | 24 | 11,80 | 8,92 |
| NaCN-Verbrauch (kg NaCN (100 %)/t Pyritkonzentrat) | 1 | 4,95 | 3,58 |
| | 4 | 7,63 | 4,89 |
| | 9 | 8,13 | 5,75 |
| | 24 | 9,66 | 7,82 |

Beispiel 4

Ein im wesentlichen oxidisches Golderz wurde einer Haufenlaugung unterworfen. Die dem Haufen zugeführte Laugungslösung (barren solution) enthielt 0,03 Gew. – % Natriumcyanid und wies einen pH – Wert von 10,5 auf.

Durch Zugabe von Wasserstoffperoxid zur barren solution in einer Menge entsprechend 0,05 Gew. – %, jedoch in Abwesenheit einer erfindungsgemäßen Manganverbindung, konnte die $O_2$ – Konzentration in der barren solution nur um etwa 2 ppm erhöht werden. Die aus dem Haufen austretende Lösung (pregnant solution) zeigte aber kaum veränderte $O_2$ – Werte an (ca. 5 ppm).

In Gegenwart von 0,1 mg Mn(II)/kg Laugungslösung, zugegeben zur barren solution als Mangansulfat, bei sonst gleichen Bedingungen konnte die $O_2$ – Konzentration der zulaufenden Laugungslösung von 6 mg/l auf 20 mg/l und in der ablaufenden Lösung von 5 auf 8 bis 12 mg/l gesteigert werden. Somit wird Wasserstoffperoxid bedarfsgerecht zersetzt. Gibt man der Laugungslösung 2,5 mg Mn(II)/kg Laugungslö – sung zu, so zersetzt sich Wasserstoffperoxid praktisch vollständig in der obersten Schicht des Haufens, wobei Entgasung stattfindet und im größten Teil des Haufens ein Defizit an Sauerstoff bzw. Wasserstoff – peroxid bestehen bleibt.

Beispiele 5 und 6

Durch Biooxidation vorbehandelte Pyritkonzentrate (gemäß Beispielen 2 und 3 wurden unter Verwen – dung von Natriumcyanid und Wasserstoffperoxid unter Konstanthaltung einer Sauerstoffkonzentration von 12 mg/l gemäß DE – PS 36 37 802 gelaugt, worin in Probe 5 kein Zersetzungskatalysator zugesetzt wurde, während in Probe 6 mit Palladium beladene Aktivkohle zugesetzt wurde. In der Laugungslösung wurde jeweils eine Cyanidkonzentration von 0,33 Gew. – % an NaCN eingestellt. Die Feststoffkonzentration betrug 25 %. In Beispiel 6 wurde 7 g Aktivkohle/kg Erzaufschlämmung zugesetzt, wobei die Aktivkohle zu 5 % mit Palladium beladen war. Die Verbrauchszahlen an Natriumcyanid und Wasserstoffperoxid, zugesetzt als 1 gew. – %ige wäßrige Lösung, folgen aus der Tabelle in Abhängigkeit von der Laugungsdauer. Überra – schenderweise war der Verbrauch sowohl an Wasserstoffperoxid als auch an Natriumcyanid in Gegenwart des Zersetzungskatalysators deutlich geringer.

| | Beispiel 5 ohne Zersetzungskatalysator | Beispiel 6 mit Pd beladener Aktivkohle |
|---|---|---|
| $H_2O_2$-Verbrauch (Kg $H_2O_2$ (70 Gew.-%)/t Erz) nach Std. Laugung | | |
| 1 | 0,65 | 0,48 |
| 2 | 1,01 | 0,76 |
| 4 | 1,76 | 1,37 |
| 6 | 2,70 | 1,78 |
| NaCN-Verbrauch (Kg NaCN (100 %)/t Erz) nach Std. Laugung | | |
| 1 | 2,40 | 2,34 |
| 2 | 2,85 | 2,91 |
| 4 | 4,17 | 3,75 |
| 6 | 4,75 | 3,84 |

Beispiel 7

Gelaugt wurde ein Gravitationskonzentrat der Osprey Mine, dessen head−grade 871,2 g Au/t Erz betrug. Der Erzpulp enthielt 16,7 Gew.−% Feststoff; der pH wurde auf 11 und die NaCN−Ausgangskonzentration auf 10 g/l eingestellt. Gelaugt wurde in einem Rührbehälter unter Zugabe einer 5 gew.−%igen

$H_2O_2$ − Lösung und Aufrechterhaltung eines $O_2$ − Niveaus von 18 ppm. Aus der Tabelle sind die Goldaus − beuten in Abhängigkeit von der Laugungsdauer angegeben, wobei in Versuch (a) kein Austausch der Laugungslösung erfolgte, in Versuch (b) nach 1, 2, 4 und 8 Stunden die nach Sedimentation des Erzes überstehende Laugungslösung vollständig ausgetauscht wurde.

| | Goldextraktion (%) nach Stdn. | | | | |
|---|---|---|---|---|---|
| | 1 | 2 | 4 | 8 | 24 |
| (a) ohne Austausch | 46,5 | 50,3 | 56,1 | 65,7 | 99,2 |
| (b) mit Austausch | 52,4 | 74,2 | 95,1 | 99,1 | 99,4 |

Beispiel 7, in welchem kein Zersetzungskatalysator zugegeben wurde, zeigt die Wirksamkeit des Laugeaustausches.

Beispiel 8

Gelaugt wurde das Erz gemäß Beispiel 7 unter den gleichen Bedingungen, jedoch ohne Laugeaus − tausch, aber in Gegenwart von 50 g granulierter Aktivkohle, welche als Zersetzungskatalysator und als Adsorber für den Goldkomplex wirkte. Der Tabelle sind die zeitabhängigen Goldausbeuten, der $H_2O_2$ − und Cyanidverbrauch zu entnehmen, wobei in (a) bei einer $O_2$ − Konzentration von 18 ppm und bei (b) eine solche von 12 ppm gelaugt wurde:

| | Goldextraktion (%) | | | | |
|---|---|---|---|---|---|
| | 1 | 2 | 4 | 8 | 24 |
| (a) 18 ppm $O_2$ | 97,4 | 98,7 | 99,2 | 99,5 | 99,6 |
| (b) 12 ppm $O_2$ | 92,7 | 97,1 | 99,6 | 99,6 | 99,6 |
| Zum Vergleich Beispiel 8 (a) | 46,5 | 50,3 | 56,1 | 65,7 | 99,2 |
| | Cyanidverbrauch (2 g/t Erz) | | | | |
| (a) 18 ppm $O_2$ | 8,5 | 11,1 | 13,2 | 25,6 | 42,4 |
| (b) 12 ppm $O_2$ | 6,5 | 7,3 | 9,9 | 14,7 | 30,7 |
| | $H_2O_2$ − Verbrauch (kg 70 %/t Erz) | | | | |
| (a) 18 ppm $O_2$ | 7,1 | 11,9 | 18,0 | 45,0 | 95,8 |
| (b) 12 ppm $O_2$ | 3,2 | 4,9 | 8,6 | 14,1 | 37,0 |

Beispiel 9

Ein südafrikanisches Golderz wurde einmal konventionell nach der Carbon − in − Leach − Technik (a) und einmal erfindungsgemäß (b) unter Verwendung der gleichen Kohle wie in (a) gelaugt. Feststoffgehalt 50 %; pH 11 − eingestellt mit CaO; NaCN Konzentration 0,05 Gew. − %; head grade 2,1 g Au/t Erz; Aktivkohle − zugabe 20 g/l Pulp.

Bei (a) steigt der $O_2$ − Wert im Pulp langsam von 1 − 2 ppm auf 8 ppm an. Bei (b) wurde durch Zugabe von 1 %iger $H_2O_2$ − Lösung eine $O_2$ − Konzentration von 12 ppm eingestellt. Die zeitabhängige Goldaus − beute folgt aus der Tabelle.

| | Goldausbeute % nach Stdn. | | | | |
|---|---|---|---|---|---|
| | 1 | 2 | 4 | 8 | 24 |
| (a) CIL | 56 | 80 | 88 | 97 | 99 |
| (b) $H_2O_2$/CIL | 81 | 90 | 99 | 99 | 99 |

11

Beispiel 10

Vergleich einer Laugung mit $H_2O_2$ ohne Aktivkohle (a) und mit Aktivkohle (b).
Südafrikanisches Haldenmaterial, head – grade 1,33 g/t Erz. NaCN – Konzentration 0,05 Gew. – %; Fest – stoffkonzentration 50 Gew. – %; pH 11. In (a) und (b) wurde mittels 1 gew. – %iger wäßriger $H_2O_2$ – Lösung ein $O_2$ – Niveau von 12 ppm eingestellt und aufrechterhalten. In Versuch 10 b wurden 20 g Kohle/l Pulp eingesetzt.

|  | Goldausbeute % nach Stdn. | | | | |
|---|---|---|---|---|---|
|  | 1 | 2 | 4 | 8 | 24 |
| (a) nur $H_2O_2$ | 70 | 72 | 81 | 88 | 89 |
| (b) $H_2O_2$ + Kohle | 80 | 83 | 92 | 93 | 93 |

Nach etwa 4 Stunden wurden erfindungsgemäß (b) mit 92 – 93 % Goldausbeute etwa 4 % – Punkte mehr Gold extrahiert als nach 24 Stunden mit $H_2O_2$, aber ohne Kohle unter sonst gleichen Bedingungen. Die Verkürzung der Laugungszeit führt zu einer Verminderung des Chemikalienverbrauches.

**Patentansprüche**

1. Verfahren zur Laugung von Gold und Silber aus Erzen, Erzkonzentraten oder Edelmetallabfällen, insbesondere aus oxidischen und sulfidischen Erzen oder Erzkonzentraten sowie Bergematerial aus früheren unvollständigen Laugungen, mit einer wäßrigen cyanidhaltigen Laugungslösung bei einem pH – Wert von 8 bis 13 unter Zugabe einer wäßrigen Wasserstoffperoxidlösung zum Erzpulp einer Rührlaugung bzw. zur barren solution einer Haufenlaugung und Aufrechterhaltung einer Sauerstoffkon – zentration in der Laugungslösung von 2 – 20 mg/l,
   dadurch gekennzeichnet,
   daß man vor oder während der Zudosierung von Wasserstoffperoxid dem Erzpulp einer Rührlaugung bzw. der barren solution einer Haufenlaugung einen Zersetzungskatalysator für Wasserstoffperoxid zugibt, wobei bei der Rührlaugung zweiwertige Manganverbindungen in einer Menge von 1 – 50 mg, berechnet als Mangan, je kg Laugungslösung oder organische oder anorganische Polymere in einer Menge von 0,1 – 20 g je kg Laugungslösung oder pulverförmige oder granulierte Kohle in einer Menge von 0,1 – 50 g je kg Laugungslösung und bei der Haufenlaugung zweiwertige Manganverbindungen in einer Menge von 0,01 – 1,0 mg, berechnet als Mangan, je kg barren solution als Zersetzungskatalysator zugesetzt werden.

2. Verfahren nach Anspruch 1,
   dadurch gekennzeichnet,
   daß man als Zersetzungskatalysator eine wäßrige Lösung von Mangan – II – salzen, vorzugsweise Mangansulfat, zugibt.

3. Verfahren nach Anspruch 1,
   dadurch gekennzeichnet,
   daß man dem Erzpulp einer Rührlaugung eine zweiwertige Manganverbindung in einer Menge von 1 bis 10 mg, berechnet als Mangan, je kg Laugungslösung zugibt.

4. Verfahren nach Anspruch 1,
   dadurch gekennzeichnet,
   daß man der barren solution einer Haufenlaugung eine Mangan – II – salzlösung in einer Menge von 0,05 bis 0,5 mg Mangan/kg Laugungslösung zugibt.

5. Verfahren nach Anspruch 1,
   dadurch gekennzeichnet,
   daß man als Zersetzungskatalysator eine Aktivkohle oder eine mit Schwermetallen oder Schwermetall – verbindungen als Zersetzungskatalysator für Wasserstoffperoxid beladene Aktivkohle verwendet.

**6.** Verfahren nach Anspruch 1,
dadurch gekennzeichnet,
daß man 1 bis 20 g, bevorzugt 5 bis 20 g, einer für das Carbon – in – Leach Verfahren geeigneten Aktivkohle pro kg Laugungslösung verwendet.

**7.** Verfahren nach Anspruch 1,
dadurch gekennzeichnet,
daß man während der Rührlaugung die gebildeten Gold – und Silbercyanokomplexe kontinuierlich oder stufenweise aus der Laugungslösung abtrennt.

**8.** Verfahren nach Anspruch 7,
dadurch gekennzeichnet,
daß man die Abtrennung der Au – und Ag – Cyanokomplexes durch Adsorption an pulverförmiger oder granulierter Kohle durchführt.

**9.** Verfahren nach Anspruch 8,
dadurch gekennzeichnet,
daß man eine Kohle verwendet, welche gleichzeitig auf Wasserstoffperoxid zersetzend wirkt und gebildete Au – und Ag – Cyanokomplexe adsorptiv bindet.

**10.** Verfahren nach Anspruch 7,
dadurch gekennzeichnet,
daß man die Abtrennung der Au – und Ag – Cyanokomplexe durch Adsorption an einem Anionenaus – tauscher oder polymergebundenen Chelatbildnern durchführt.

**11.** Verfahren nach Anspruch 7,
dadurch gekennzeichnet,
daß man die Abtrennung der Au – und Ag – Cyanokomplexe durch kontinuierliches oder stufenweises Ausschleusen von Laugungslösung und Ersatz derselben durch frische Laugungslösung durchführt.

**12.** Verfahren nach Anspruch 1,
dadurch gekennzeichnet,
daß man Wasserstoffperoxid in Form einer bis zu 30 gew. – %igen waßrigen Lösung zudosiert.

**Claims**

**1.** A process for the leaching of gold and silver from ores, ore concentrates or noble metal waste, in particular from oxidic and sulphidic ores or ore concentrates and dump material from earlier incomplete leaching processes, using an aqueous leaching solution containing cyanide at a pH of from 8 to 13 with the addition of an aqueous hydrogen peroxide solution to the ore pulp of an agitation leaching or to the barren solution of a heap leaching and maintenance of an oxygen concentration in the leaching solution of from 2 – 20 mg/l, characterised in that a decomposition catalyst for hydrogen peroxide is added to the ore pulp of an agitation leaching or to the barren solution of a heap leaching before or during the addition of hydrogen peroxide, the decomposition catalyst added in the case of agitation leaching consisting of divalent manganese compounds in a quantity of from 1 to 50 mg, calculated as manganese, per kg of leaching solution or organic or inorganic polymers in a quantity of from 0.1 to 20 g per kg of leaching solution or pulverulent or granulated carbon in a quantity of from 0.1 to 50 g per kg of leaching solution and the decomposition catalyst added in the case of heap leaching consisting of divalent manganese compounds in a quantity of from 0.01 to 1.0 mg, calculated as manganese, per kg of barren solution.

**2.** A process according to Claim 1, characterised in that an aqueous solution of manganese – II salts, preferably manganese sulphate, is added as decomposition catalyst.

**3.** A process according to Claim 1, characterised in that a divalent manganese compound is added to the ore pulp of an agitation leaching in a quantity of from 1 to 10 mg, calculated as manganese, per kg of leaching solution.

**4.** A process according to Claim 1, characterised in that a manganese – II – salt solution is added to the barren solution of a heap leaching in a quantity of from 0.05 to 0.5 mg of manganese per kg of leaching solution.

**5.** A process according to Claim 1, characterised in that the decomposition catalyst used is an active charcoal or an active charcoal charged with heavy metals or heavy metal compounds as decomposition catalyst for hydrogen peroxide.

**6.** A process according to Claim 1, characterised in that from 1 to 20 g, preferably from 5 to 20 g, of an active charcoal suitable for the carbon – in – leach process are used per kg of leaching solution.

**7.** A process according to Claim 1, characterised in that the gold and silver cyano complexes formed are removed continuously or stepwise from the leaching solution during the agitation leaching.

**8.** A process according to Claim 7, characterised in that the separation of the Au – and Ag – cyano complexes is carried out by adsorption on pulverulent or granulated charcoal.

**9.** A process according to Claim 8, characterised in that the charcoal used is one which has a decomposing action on hydrogen peroxide and at the same time adsorptively binds Au – and Ag – cyano complexes formed.

**10.** A process according to Claim 7, characterised in that the separation of the Au – and Ag – cyano complexes is carried out by adsorption on an anion exchanger or polymer – bound chelate formers.

**11.** A process according to Claim 7, characterised in that separation of the Au – and Ag – cyano complexes is carried out by continuous or stepwise discharge of leaching solution and replacement thereof by fresh leaching solution.

**12.** A process according to Claim 1, characterised in that hydrogen peroxide is added in the form of an up to 30% by weight aqueous solution.

**Revendications**

**1.** Procédé de lessivage d'or et d'argent à partir de minerais, de concentrés de minerai ou de déchets de métaux précieux, notamment à partir de minerais ou concentrés de minerais oxydés et sulfurés, ainsi qu'à partir de matériau de mine résultant de lessivages antérieurs incomplets, avec une solution aqueuse de cyanure à un pH compris entre 8 et 13 en ajoutant une solution aqueuse de peroxyde d'hydrogène à la pulpe de minerai d'une lessive agitée ou à une solution simple de lessivage en tas et avec maintien d'une concentration en oxygène dans la solution de lessivage de 2 à 20 mg/l, procédé caractérisé on ce qu'avant ou pendant l'addition de peroxyde d'hydrogène à la pulpe de minerai d'une lessive agitée ou à la solution simple de lessivage en tas, on ajoute un catalyseur de décomposition du peroxyde d'hydrogène, en ajoutant à la lessive agitée des composés bivalents de manganèse à une concentration de 1 – 50 mg, calculée sous forme de manganèse, par kg de solution de lessivage ou des polymères organiques ou minéraux à une concentration de 0,1 – 20 g par kg de solution de lessivage, ou du charbon granulé ou en poudre à une concentration de 0,1 – 50 g par kg de solution de lessivage et pour le lessivage en tas des composés bivalents de manganèse, à une concentration de 0,01 – 1,0 mg, calculée sous forme de manganèse par kg de solution simple, en tant que catalyseur de décomposition.

**2.** Procédé selon la revendication 1, caractérisé on ce qu'on ajoute comme catalyseur de décomposition une solution aqueuse de sels de manganèse II, de préférence du sulfate de manganèse.

**3.** Procédé selon la revendication 1, caractérisé en ce qu'on ajoute à la pulpe de minerai d'une lessive agitée un composé bivalent de manganèse à une concentration de 1 à 10 mg, calculée sous forme de manganèse, par kg de solution de lessive.

**4.** Procédé selon la revendication 1, caractérisé en ce que dans la solution simple d'une lessive en tas, on ajoute une solution de sel de manganèse II à une concentration de 0,05 à 0,5 mg de manganèse/kg de

14

solution de lessivage.

5. Procédé selon la revendication 1, caractérisé en ce que comme catalyseur de décomposition, an utilise un charbon actif ou un charbon actif chargé de métaux lourds ou de composés de métaux lourds comme catalyseur de décomposition du peroxyde d'hydrogène.

6. Procédé selon la revendication 1, caractérisé en ce qu'on utilise 1 à 20 g, de préférence 5 à 20 g d'un charbon actif approprié au procédé Carbon – in – Leach par kg de solution de lessivage.

7. Procédé selon la revendication 1, caractérisé en ce que pendant le lessivage agité on sépare de la solution de lessivage en continu ou en discontinu les complexes cyano d'or et d'argent formés.

8. Procédé selon la revendication 7, caractérisé en ce qu'on réalise la séparation du complexe cyano d'or et d'argent par adsorption sur du charbon granulé ou en poudre.

9. Procédé selon la revendication a, caractérisé en ce qu on utilise un charbon, qui agit simultanément comme décomposeur de peroxyde d'hydrogène et adsorbant des complexes cyano d'Au et Ag.

10. Procédé selon la revendication 7, caractérisé en ce qu'on réalise la séparation des complexes cyano d'Au et Ag par adsorption sur un échangeur anionique ou des formateurs de chélates liés à un polymère.

11. Procédé selon la revendication 7, caractérisé en ce qu'on réalise la séparation des complexes cyano d'Au et Ag par prélèvement continu ou discontinu de la solution de lessivage et son remplacement par de la solution fraîche de lessivage.

12. Procédé selon la revendication 1, caractérisé en ce qu'on ajoute en dosant du peroxyde d'hydrogène sous forme d'une solution aqueuse contenant jusqu'à 30 % en poids.